# FASCICULE DE BREVET EUROPEEN

(11) **EP 1 304 028 B1**
(45) Date de publication et mention de la délivrance du brevet: **06.04.2005**
(21) Numéro de dépôt: 02292402.1
(22) Date de dépôt: 30.09.2002
(51) Int. Cl.: A01K 5/01

(54) **Ecuelle jetable adaptée à être utilisée pour préparer un plat prêt à l'emploi pour animal de compagnie**
Einwegfressnapf zum Zubereiten von Futter fertig zum Essen für ein Haustier
Disposable food serving bowl for preparing food ready for consumption by a pet

(30) Priorité: 05.10.2001 FR 0112875
(43) Date de publication de la demande: 23.04.2003
(73) Titulaire: Covi, 49300 Cholet (FR)
(72) Inventeur: Bourigault, Patrice, 49300 Cholet (FR)
(74) Mandataire: Rémont, Claude

(56) Documents cités:
- DE-A- 19 943 837
- DE-U- 29 610 824
- US-A- 3 622 036
- US-A- 4 949 678
- US-A- 5 209 184

## Description

La présente invention concerne une écuelle jetable adaptée à être utilisée pour préparer un plat prêt à l'emploi et à contenir une quantité de nourriture constituant une ration, notamment journalière, sensiblement complète et équilibrée pour un animal de compagnie tel que chien ou chat.

On connaît de nombreux types d'écuelle jetable.

On connaît notamment une écuelle comportant un fond sensiblement plat se prolongeant vers le haut et vers l'extérieur par au moins une première jupe comportant au moins un bord annulaire supérieur adapté à recevoir un opercule détachable pour fermer l'écuelle et préserver ladite nourriture. Voir e.g. le document DE-A-19943837.

Toutefois, les écuelles connues ont une forme qui ne permet pas à un animal de consommer la nourriture contenue dans cette écuelle directement dans celle-ci, ce qui oblige à transporter ladite nourriture dans une autre gamelle dont la forme est mieux adaptée à la morphologie de l'animal concerné.

Un tel transfert de la nourriture de l'écuelle jetable à une gamelle dans laquelle mange l'animal est peu apprécié par les utilisateurs qui doivent manipuler la nourriture, l'écuelle jetable et la gamelle, puis jeter l'écuelle après transfert de la nourriture et nettoyer la gamelle après consommation de ladite nourriture par l'animal.

Le but de la présente invention est de remédier aux inconvénients des écuelles connues et de proposer une écuelle du type précité qui soit conformée de manière à permettre à l'animal de consommer directement et immédiatement dans ladite écuelle, dès l'ouverture de l'opercule, la nourriture contenue dans cette dernière, l'écuelle pouvant être jetée après consommation de ladite nourriture par l'animal.

Suivant la présente invention comme définie dans la revendication principale, l'écuelle du type précité est caractérisée en ce que la face libre adhésive de l'élément adhésif est recouverte par une pellicule de protection pelable ;
- l'écuelle est conformée de façon telle que, lorsque le bord périphérique inférieur est en contact avec un sol sensiblement plat, ladite face libre de l'élément adhésif est également en contact avec ledit sol sensiblement sur toute sa superficie ;
- le rapport entre le diamètre intérieur moyen de la première jupe et la hauteur intérieure de l'écuelle est au moins égal à 3 environ, est avantageusement compris entre 3,5 environ et 7,5 environ, et est de préférence compris entre 4 et 6.

Les essais menés par la demanderesse ont révélé que l'écuelle selon la présente invention, qui est stable, qui adhère fortement sur le sol par l'élément adhésif qu'elle comporte, et qui est adaptée à la morphologie de l'animal par son rapport élevé entre le diamètre intérieur moyen de la première jupe et la hauteur intérieure du bord supérieur, est parfaitement adaptée à permettre à l'animal de consommer directement dans ladite écuelle la nourriture contenue dans celle-ci.

En particulier, le diamètre important et la faible hauteur permettent à l'animal de saisir latéralement entre ses dents les morceaux contenus dans l'écuelle.

D'autres caractéristiques et avantages de la présente invention apparaîtront dans la description détaillée ci-après.

Aux dessins annexés, donnés uniquement à titre d'exemples non limitatifs :
- la figure 1 est une vue schématique en coupe verticale d'un plat prêt à l'emploi selon un mode de réalisation de la présente invention particulièrement adapté aux petits animaux tels que chats et petits chiens ;
- la figure 2 est une vue partielle semblable à la figure 1 d'un autre mode de réalisation de la présente invention particulièrement adapté aux grands animaux, représentant l'écuelle seule sans opercule détachable et sans contenu pour simplifier la figure ;
- la figure 3 est une vue partielle semblable à la figure 1 d'une écuelle selon une variante du mode de réalisation représenté à ladite figure 1, et représentant plusieurs variantes concernant la forme de la seconde jupe ;
- la figure 4 est une vue schématique agrandie du détail D de la figure 3.

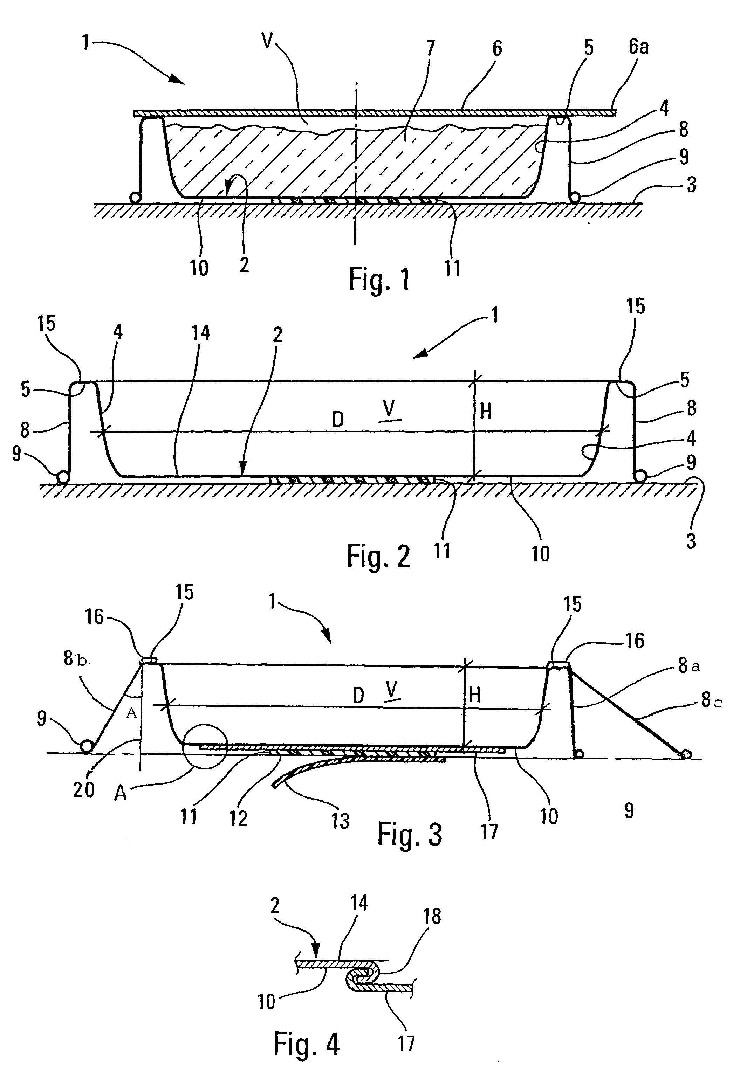

Dans le mode de réalisation représenté à la figure 1, l'écuelle 1 jetable est utilisée pour préparer un plat prêt à l'emploi, contenant une quantité de nourriture constituant une ration, notamment journalière, sensiblement complète et équilibrée pour un animal de compagnie tel que chien ou chat.

Cette écuelle 1 comporte un fond 2 sensiblement plat et est adaptée à être posée sur un sol 3 sensiblement plat.

Le fond 2 se prolonge vers le haut et vers l'extérieur par au moins une première jupe 4 comportant au moins un bord annulaire 5 adapté à recevoir un opercule détachable 6 pour fermer l'écuelle 1 et préserver la nourriture, schématisée en 7 à la figure, contenue dans ladite écuelle 1.

Suivant la présente invention, la première jupe 4 se prolonge vers l'extérieur par ledit bord annulaire 5 qui est un bord périphérique supérieur sensiblement sans aspérités, et qui se prolonge lui-même par une seconde jupe 8 s'étendant vers le bas et vers l'extérieur jusqu'à un bord périphérique inférieur 9.

Le fond 2 porte sur sa face inférieure 10 un élément adhésif 11 fixé sur ladite face inférieure 10 et dont la face libre adhésive 12 est recouverte par une pellicule de protection pelable d'un type connu quelconque, schématisée en 13 dans une position légèrement arrachée à la figure 3.

L'écuelle 1 est conformée de façon telle que lorsque le bord périphérique inférieur 9 est en contact avec un sol sensiblement plat 3, ladite face libre adhésive 12 de l'élément adhésif 11 est également en contact avec ledit sol 3 sensiblement sur toute sa superficie, de sorte que l'écuelle 1 adhère fortement sur le sol 3.

L'élément adhésif 11 est par exemple un élément adhésif double face, connu par lui-même, appliqué sur la face inférieure 10 du fond 2.

Le rapport R1 entre le diamètre intérieur moyen D de la première jupe 4 et la hauteur intérieure H de l'écuelle 1 est au moins égal à 3 environ, est avantageusement compris entre 3,5 environ et 7,5 environ, et est de préférence compris entre 4 et 6.

Le diamètre intérieur moyen D de la première jupe 4 est, pour une première jupe intérieure 4 de section sensiblement circulaire et de profil sensiblement régulier, le diamètre de la jupe 4 à un niveau correspondant à la moitié de la hauteur intérieure de cette jupe 4 et de l'écuelle 1, cette hauteur intérieure H étant la hauteur entre la face supérieure 14 du fond et le niveau de la face supérieure 15 du bord supérieur 5.

Pour une première jupe 4 de forme non circulaire, par exemple de forme ovale, ou de profil plus compliqué, le diamètre intérieur moyen pourrait également être calculé à partir du volume intérieur de l'écuelle, comme étant le diamètre d'un cylindre ayant la même hauteur intérieure et le même volume intérieur que ladite écuelle.

De la même manière, le rapport R2 entre le diamètre intérieur moyen D et la racine cubique du volume utile V de l'écuelle 1 est compris entre 1,6 environ et 2,3 environ, avantageusement entre 1,7 environ et 2,0 environ.

Parallèlement, le rapport R3 entre la hauteur intérieure H et la racine cubique du volume utile V de l'écuelle 1 est compris entre 0,28 environ et 0,52 environ, avantageusement entre 0,3 et 0,45, de préférence entre 0,325 et 0,425.

Comme on peut le voir notamment à la figure 2, le bord supérieur 5 présente avantageusement une partie annulaire sensiblement plane 15 qui facilite la mise en place et la fixation de l'opercule détachable 6.

L'opercule détachable 6 est fixé sur la face supérieure 15 du bord annulaire supérieur 5, par exemple par collage, notamment par thermocollage, et présente de façon connue une languette 6a de tirage pour arracher l'opercule 6.

L'écuelle 1 est, par exemple, réalisée en tôle mince en acier galvanisé. Elle pourrait également être réalisée en une matière plastique appropriée.

L'écuelle 1 est avantageusement revêtue, au moins sur la surface supérieure 15 du bord annulaire supérieur 5, d'une matière thermofusible, schématisée en 16 à la figure 3, permettant la fixation de l'opercule 6.

La totalité de la surface supérieure de l'écuelle, du fond 2 jusqu'au bord inférieur 9, peut être revêtue d'une telle matière de façon à éviter tout contact entre le matériau de l'écuelle et, d'une part, la nourriture 7, d'autre part, la gueule de l'animal.

En variante, l'opercule détachable 6 pourrait comporter, sur sa face adaptée à venir en contact avec ladite face supérieure 15 du bord supérieur 5 de l'écuelle, d'une matière thermofusible.

D'une manière générale, la face supérieure de l'écuelle est lisse, le bord supérieur 5 est, en coupe axiale, relié à la première jupe intérieure 4 et à la seconde jupe extérieure 8 par des arrondis pour éviter toute aspérité risquant de blesser l'animal. De préférence, l'écuelle 1 est caractérisée par l'absence d'angle vif saillant ou rentrant entre le fond 2 et le bord inférieur 9, tous les raccords entre surfaces adjacentes se faisant par des arrondis de rayon approprié pour permettre à l'animal de consommer toute la nourriture contenue dans ladite écuelle sans risque de se blesser et sans risque de voir de la nourriture bloquée sur la surface de l'écuelle.

Dans le mode de réalisation représenté aux figures 3 et 4, l'écuelle 1 comporte un fond serti 17. Comme schématisé à la figure 4, le fond serti 17 est serti sur la face inférieure 10 du fond 2 autour d'une collerette 18 en saillie vers l'extérieur ménagée dans ledit fond 2. Le fond serti 17 porte bien entendu l'élément adhésif 11. Un tel fond serti 17 permet évidemment un remplissage rapide du volume intérieur V de l'écuelle par le fond 2 et une fermeture très rapide du fond 2 par sertissage du fond serti 17 après remplissage.

La demanderesse a ainsi défini, selon les critères exposés ci-dessus, deux modèles principaux d'écuelles :
- une petite écuelle, schématisée aux figures 1 et 3, destinée aux chats et aux petits chiens, a par exemple un diamètre moyen de 9,14 cm, une hauteur intérieure de 2 cm, et présente un rapport R1 compris entre 4,5 et 4,6, un rapport R2 compris entre 1,8 et 1,85 environ, et un rapport R3 de l'ordre de 0,4. Cette écuelle a un volume intérieur de 127 cm³, une hauteur totale de 2,1 cm et un diamètre extérieur de 10,9 cm,
- une écuelle de grande taille, destinée à des chiens de taille moyenne, présentant un volume utile d'environ 349 cm³, schématisée à la figure 2. Cette écuelle présente un diamètre intérieur moyen de 13,4 cm environ, une hauteur intérieure de 2,5 cm environ, et présente un rapport R1 compris entre 5 et 5,5, un rapport R2 compris entre 1,9 et 1,95, et un rapport R3 compris entre 0,35 et 0,4. Cette écuelle a une hauteur totale de 2,6 cm et un diamètre extérieur de 15,4 cm environ.

Chacune de ces deux écuelles a une première jupe intérieure s'évasant vers le haut et vers l'extérieur selon un angle de 10° avec l'axe de l'écuelle, et est réalisée en une tôle d'acier galvanisé de 0,12 mm d'épaisseur revêtue sur sa face supérieure d'un film de polypropylène et sur sa face inférieure d'un vernis. L'opercule est réalisé en une feuille d'aluminium de 40 à 70 microns revêtue d'un vernis thermoscellant ou d'un film de polypropylène.

Bien entendu, des écuelles de taille intermédiaire sont possibles, ainsi que des écuelles de dimensions supérieures ou inférieures.

On a ainsi décrit un modèle général d'écuelle et deux modèles particuliers destinés aux animaux de petite taille et de moyenne taille qui sont les consommateurs les plus nombreux de nourriture sous forme de pâtés ou de viandes en sauce.

Ces écuelles sont dimensionnées de manière telle qu'elles constituent chacune une écuelle prête à l'emploi dans laquelle l'animal peut consommer facilement et proprement la nourriture contenue dans ladite écuelle, et ceci de manière systématique et non pas à titre exceptionnel.

Dans le mode de réalisation des figures 1 et 2, la seconde jupe 8 est sensiblement perpendiculaire au fond 2 : un tel mode de réalisation, qui interdit d'empiler les écuelles vides les unes sur les autres avant leur remplissage, présente l'avantage de permettre d'exposer une écuelle pleine en position sensiblement verticale en présentant à la vue des clients et utilisateurs la face extérieure, en générale décorée d'un motif publicitaire, de son opercule 6.

Dans le mode de réalisation schématisé à la figure 3, la jupe 8 fait avec la direction 20 perpendiculaire au fond 2 un angle A qui peut avoir une valeur quelconque compatible, d'une part, avec la morphologie de l'animal, d'autre part, avec la possibilité d'empiler les écuelles vides les unes sur les autres sans inconvénients notables sur les aspects technique, industriel, économique et esthétique.

Ainsi, dans le cas de la jupe 8a schématisée à la droite de la figure, l'angle A a une valeur d'environ 5°, dans le cas de la jupe 8b à gauche de la figure, l'angle A a une valeur d'environ 30°, et dans le cas de la jupe 8c à droite de la figure, l'angle A a une valeur d'environ 55°.

D'une manière générale, l'angle A a une valeur comprise ordinairement entre 2° et 60° environ, avantageusement entre 5° et 45° environ, de préférence entre 8° et 25° environ.

On a ainsi décrit un plat prêt à l'emploi selon la présente invention, et une écuelle adaptée à être utilisée pour préparer un tel plat.

La nourriture contenue dans ce plat peut être sous la forme d'un pâté ou d'un mélange moins dense de viande en morceaux ou en boulettes, et de légumes ou de garniture avec sauce, selon une composition et une recette connues quelconques.

Cette nourriture peut également se présenter sous forme de croquettes ou boulettes agglomérées sensiblement sèches. Dans ce cas, la nourriture a une masse spécifique en vrac plus faible compte-tenu des vides entre les croquettes ou boulettes, et la ration contenue dans le plat occupe un volume supérieur à celui de la ration sous forme de pâté ou de mélange en sauce.

L'écuelle contenant les croquettes peut avoir des dimensions plus grandes que celles de l'écuelle contenant le pâté ou le mélange en sauce, les proportions géométriques et autres caractéristiques décrites plus haut restant inchangées.

Bien entendu, la présente invention n'est pas limitée aux modes de réalisation que l'on vient de décrire, et l'on peut apporter à ceux-ci de nombreux changements et modifications sans sortir du domaine de l'invention comme définie dans les revendications.

On peut ainsi donner à la jupe intérieure 4 et à la jupe extérieure 8 un profil de forme différente des formes décrites et représentées aux figures, à condition d'éviter les angles vifs ou de rayon trop petit, les aspérités, les coins et d'une manière générale toute zone susceptible de constituer un volume étroit dans lequel de la nourriture peut rester accrochée hors de la portée de l'animal concerné.

## Revendications

1. Ecuelle (1) prête à l'emploi adaptée à contenir de la nourriture (7), et notamment une ration sensiblement complète et équilibrée pour un animal de compagnie tel que chien ou chat, cette écuelle (1) comportant un fond (2) sensiblement plat se prolongeant vers le haut et vers l'extérieur par au moins une première jupe (4) comportant au moins un bord annulaire (5) adapté à recevoir un opercule détachable (6) pour fermer l'écuelle (1) et préserver ladite nourriture (7),
la première jupe (4) se prolongeant vers l'extérieur par un bord périphérique supérieur (5) sensiblement sans aspérités, ledit bord supérieur (5) se prolongeant lui-même par une seconde jupe (8) s'étendant vers le bas et vers l'extérieur jusqu'à un bord périphérique inférieur (9), et
le fond (2) portant sur sa face inférieure (10) un élément adhésif (11) fixé sur ladite face inférieure (10), **caractérisée en ce que** la face libre adhésive (12) dudit élément adhésif est recouverte par une pellicule de protection pelable (13) ;
- l'écuelle (1) est conformée de façon telle que, lorsque le bord périphérique inférieur (9) est en contact avec un sol (3) sensiblement plat, ladite face libre (12) de l'élément adhésif (11) est également en contact avec ledit sol (3) sensiblement sur toute sa superficie ;
- le rapport (R1) entre le diamètre intérieur moyen (D) de la première jupe (4) et la hauteur intérieure (H) de l'écuelle (1) est au moins égal à 3 environ, est avantageusement compris entre 3,5 environ et 7,5 environ et est de préférence compris entre 4 et 6.

2. Ecuelle selon la revendication 1, **caractérisée en ce que** le rapport (R2) entre le diamètre intérieur moyen (D) et la racine cubique du volume utile (V) de l'écuelle (1) est compris entre 16 environ et 23 environ, avantageusement entre 17 environ et 20 environ.

3. Ecuelle selon la revendication 1 ou 2, **caractérisée en ce que** le rapport (R3) entre la hauteur intérieure (H) et la racine cubique du volume utile (V) de l'écuelle (1) est compris entre 2,8 environ et 5,2 environ, avantageusement entre 3 et 4,5, de préférence entre 3,25 et 4,25.

4. Ecuelle selon l'une quelconque des revendications précédentes, **caractérisée en ce que** le bord supérieur (5) présente sur sa face supérieure (14) une partie annulaire sensiblement plane et parallèle au fond (3).

5. Ecuelle selon l'une quelconque des revendications précédentes, **caractérisée en ce que** l'opercule détachable (6) est fixé sur la face supérieure (15) dudit bord supérieur (5), par exemple par collage, notamment par thermocollage.

6. Ecuelle selon l'une quelconque des revendications précédentes **caractérisée en ce qu'**elle comporte un fond serti (17).

7. Ecuelle selon l'une quelconque des revendications précédentes, **caractérisée en ce qu'**elle est réalisée en tôle mince en acier galvanisé.

8. Ecuelle selon l'une quelconque des revendications précédentes, **caractérisée en ce qu'**elle est revêtue, au moins sur la surface supérieure (15) dudit bord supérieur (5), d'une matière thermofusible (16).

9. Ecuelle selon l'une quelconque des revendications précédentes, **caractérisée en ce que** sa face supérieure est lisse.

## Patentansprüche

1. Gebrauchsfertiger Napf (1), der Nahrungsmittel (7) enthalten kann, und insbesondere eine im Wesentlichen komplette und ausgewogene Ration für ein Haustier, wie zum Beispiel einen Hund oder eine Katze, wobei dieser Napf (1) einen Boden (2), der im Wesentlichen flach ist, umfasst, der sich nach oben und außen über mindestens eine erste Schürze (4) erstreckt, die mindestens einen ringförmigen Rand (5) umfasst, der einen abnehmbaren Deckel (6) aufnehmen kann, um den Napf (1) zu verschließen und das Nahrungsmittel (7) zu konservieren, wobei sich die erste Schürze (4) nach außen über einen oberen peripheren Rand (5) im Wesentlichen ohne Rauheiten verlängert, wobei der obere Rand (5) sich selbst durch eine zweite Schürze (8) verlängert, die sich nach unten und nach außen bis zu einem unteren peripheren Rand (9) erstreckt, und wobei der Boden (2) auf seiner unteren Seite (10) ein Klebeelement (11), das auf der unteren Fläche (10) befestigt ist, trägt, **dadurch gekennzeichnet, dass** die Fläche ohne Klebstoff (12) des Klebeelements von einer abziehbaren Schutzfolie (13) bedeckt ist,
- dass der Napf (1) so ausgebildet ist, dass, wenn der untere periphere Rand (9) mit einem im wesentlichen ebenen Boden (3) in Berührung ist, die freie Fläche (12) des Klebeelements (11) ebenfalls mit dem Boden (3) im Wesentlichen auf ihrer ganzen Oberfläche in Berührung ist,
- dass das Verhältnis (R1) zwischen dem mittleren Innendurchmesser (D) der ersten Schürze (4) und der inneren Höhe (H) des Napfes (1) zumindest etwa gleich 3 ist, vorteilhafterweise zwischen etwa 3,5 und 7,5 liegt und vorzugsweise zwischen 4 uns 6.

2. Napf nach Anspruch 1, **dadurch gekennzeichnet, dass** das Verhältnis (R2) zwischen dem mittleren inneren Durchmesser (D) und der Kubikwurzel des Nutzvolumens (V) des Napfes (1) zwischen etwa 16 und etwa 23 liegt, vorteilhafterweise zwischen etwa 17 und etwa 20.

3. Napf nach Anspruch 1 oder 2, **dadurch gekennzeichnet, dass** das Verhältnis (R3) zwischen der inneren Höhe (H) und der Kubikwurzel des Nutzvolumens (V) des Napfes (1) zwischen etwa 2,8 und etwa 5,2, vorteilhafterweise zwischen 3 und 4,5, bevorzugt zwischen 3,25 und 4,25 liegt.

4. Napf nach einem der vorhergehenden Ansprüche, **dadurch gekennzeichnet, dass** der obere Rand (5) auf seiner oberen Seite (14) einen im Wesentlichen ringförmigen und zu dem Boden (3) parallelen Teil aufweist.

5. Napf nach einem der vorhergehenden Ansprüche, **dadurch gekennzeichnet, dass** der abnehmbare Deckel (6) auf der oberen Seite (15) des oberen Rands (5) zum Beispiel durch Kleben, insbesondere Wärmekleben befestigt ist.

6. Napf nach einem der vorhergehenden Ansprüche, **dadurch gekennzeichnet, dass** er einen gefalzten Boden (17) umfasst.

7. Napf nach einem der vorhergehenden Ansprüche, **dadurch gekennzeichnet, dass** er aus dünnem Blech aus verzinktem Stahl hergestellt ist.

8. Napf nach einem der vorhergehenden Ansprüche, **dadurch gekennzeichnet, dass** er zumindest auf der oberen Fläche (15) des oberen Rands (5) mit einem wärmeschmelzbaren Stoff beschichtet ist.

9. Napf nach einem der vorhergehenden Ansprüche, **dadurch gekennzeichnet, dass** seine obere Seite glatt ist.

## Claims

1. Ready-for-use bowl (1) adapted to contain food (7), and in particular a substantially complete and balanced ration, for a pet such as a dog or cat, this bowl (1) comprising a substantially flat bottom (2) extended upwards and outwards by at least one first skirt (4) comprising at least one annular rim (5) adapted to receive a detachable lid (6) for closing off the bowl (1) and preserving the said food (7),
the first skirt (4) being extended outwards by a top peripheral rim (5) substantially without roughness, the said top rim (5) itself being extended by a second skirt (8) extending downwards and outwards as far as a bottom peripheral rim (9), and
the bottom (2) carrying on its bottom face (10) an adhesive element (11) fixed to the said bottom face (10), **characterised in that** the adhesive free face (12) of the said adhesive element is covered with a peel-off protective film (13);
- the bowl (1) is conformed so that, when the bottom peripheral rim (9) is in contact with a substantially flat floor (3), the said free face (12) of the adhesive element (11) is also in contact with the said floor (3) substantially over its entire surface;
- the ratio (R1) between the average inside diameter (D) of the first skirt (4) and the internal height (H) of the bowl (1) is at least approximately 3, is advantageously between approximately 3.5 and approximately 7.5 and is preferably between 4 and 6.

2. Bowl according to Claim 1, **characterised in that** the ratio (R2) between the average inside diameter (D) and the cube root of the useful volume (V) of the bowl (1) is between approximately 16 and approximately 23, advantageously between approximately 17 and approximately 20.

3. Bowl according to Claim 1 or 2, **characterised in that** the ratio (R3) between the internal height (H) and the cube root of the useful volume (V) of the bowl (1) is between approximately 2.8 and approximately 5-2, advantageously between 3 and 4.5, preferably between 3.25 and 4.25.

4. Bowl according to any one of the preceding claims, **characterised in that** the top edge (5) has on its top face (14) a substantially planar annular part parallel to the bottom (3).

5. Bowl according to any one of the preceding claims, **characterised in that** the detachable lid (6) is fixed to the top face (15) of the said top edge (5), for example by adhesive bonding, in particular by thermal bonding.

6. Bowl according to any one of the preceding claims, **characterised in that** it comprises a crimped bottom (17).

7. Bowl according to any one of the preceding claims, **characterised in that** it is produced from a thin galvanised steel sheet.

8. Bowl according to any one of the preceding claims, **characterised in that** it is coated, at least on the top surface (15) of the said top rim (5), with a heat-fusible material (16) .

9. Bowl according to any one of the preceding claims, **characterised in that** its top face is smooth.
